(19) Europäisches Patentamt
European Patent Office
Office européen des brevets

(11) **EP 3 729 598 B1**

(12) **FASCICULE DE BREVET EUROPEEN**

(45) Date de publication et mention de la délivrance du brevet:
**29.09.2021 Bulletin 2021/39**

(21) Numéro de dépôt: **18845439.1**

(22) Date de dépôt: **20.12.2018**

(51) Int Cl.:
*H02J 3/38* (2006.01)    *H02J 3/46* (2006.01)

(86) Numéro de dépôt international:
**PCT/FR2018/053488**

(87) Numéro de publication internationale:
**WO 2019/122768 (27.06.2019 Gazette 2019/26)**

(54) **PROCÉDÉ ET SYSTÈME DE RÉGULATION D'UN CONVERTISSEUR ÉLECTRIQUE POUR STABILISATION AUTONOME DE FRÉQUENCE AVEC DES TRANSITOIRES DE CHARGE DANS UN MICRO-RÉSEAU COMPRENANT UN GROUPE ÉLECTROGÈNE DIESEL**

VERFAHREN UND SYSTEM ZUR REGELUNG EINES ELEKTRISCHEN KONVERTERS ZUR AUTONOMEN FREQUENZSTABILISIERUNG MIT LASTÄNDERUNGEN IN EINEM INSELNETZ UMFASSEND EINES DIESELAGGREGATS

METHOD AND SYSTEM FOR REGULATING AN ELECTRICAL CONVERTER FOR AUTONOMOUS FREQUENCY STABILISATION WITH LOAD TRANSIENTS IN A MICROGRID COMPRISING A DIESEL ENGINE-GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1762881**

(43) Date de publication de la demande:
**28.10.2020 Bulletin 2020/44**

(73) Titulaire: **Socomec**
**67230 Benfeld (FR)**

(72) Inventeurs:
• **CORRADIN, Michele**
**36030 COSTABISSARA (VI) (IT)**
• **TOIGO, Igino**
**32032 FELTRE (BL) (IT)**
• **MATTAVELLI, Paolo**
**35121 PADOVA (IT)**

(74) Mandataire: **Cabinet Beau de Loménie**
**158, rue de l'Université**
**75340 Paris Cedex 07 (FR)**

(56) Documents cités:
**EP-A1- 2 731 223       EP-A1- 3 185 386**
**WO-A1-2016/133843    CN-A- 105 743 130**
**CN-A- 107 294 201**

**Description**

Arrière-plan de l'invention

L'invention concerne un système et un procédé de stabilisation de la fréquence dans un micro-réseau comprenant un groupe électrogène.

L'invention est applicable aux micro-réseaux ou à des installations électriques similaires dans lesquels un convertisseur de puissance, dénommé « power converter system » en anglais (PCS) et utilisant normalement une batterie comme réservoir d'énergie, travaille en parallèle d'un groupe électrogène formant une unité de production électrique. L'unité de production électrique, c'est-à-dire le groupe électrogène, alimente des charges électriques et gère la répartition de l'énergie électrique en fonction de la différence entre les demandes d'électricité des charges et la quantité d'électricité produite.

Un micro-réseau, ou « microgrid » en anglais, est un groupement localisé de sources d'électricité et de charges qui opère normalement connecté et synchrone avec le réseau électrique centralisé traditionnel, également appelé « macrogrid » en anglais, mais qui peut se déconnecter et fonctionner de manière autonome selon les conditions physiques et/ou économiques. Un micro-réseau fournit ainsi une bonne solution pour fournir de l'énergie en situation d'urgence en ayant la possibilité de passer d'un mode de fonctionnement indépendant, ou « islanded mode » en anglais, à un mode connecté au réseau principal. Cependant, le contrôle et la protection sont des problématiques importantes dans ce type de configuration réseau.

Un groupe électrogène diesel est un groupe électrogène particulier consistant à combiner un moteur diesel avec un générateur électrique, souvent un alternateur, pour générer de l'énergie électrique. La combinaison d'un moteur diesel, d'un générateur et de divers dispositifs auxiliaires, tels que les dispositifs pour la base, l'auvent, l'atténuation acoustique, les systèmes de commande, les disjoncteurs, les chauffe-eau, les systèmes de préchauffage et le système de démarrage est appelée en anglais « generating set » ou bien « genset ».

Afin d'assurer le fonctionnement autonome du micro-réseau et de générer moins de fonctionnement transitoire, le PCS et le groupe électrogène d'un micro-réseau doivent tous deux fonctionner comme des générateurs de tension.

Des techniques spécifiques doivent être utilisées pour assurer le bon fonctionnement de deux ou plusieurs générateurs de tension fonctionnant en parallèle.

Lorsqu'un PCS fonctionne en parallèle avec un groupe électrogène, tous les deux fonctionnant comme des générateurs de tension, l'interaction entre les deux systèmes de contrôle peut parfois provoquer une instabilité de la tension et de la fréquence du micro-réseau principalement pendant le transitoire de charge.

En effet, le groupe électrogène possède un contrôleur de fréquence et un contrôleur de tension. Il a également une inertie pertinente et une impédance équivalente élevée. Le PCS possède également des contrôleurs de tension et de fréquence, et ces contrôleurs peuvent interagir avec ceux du groupe électrogène lorsque le groupe électrogène et le PCS fonctionnent ensemble comme des générateurs de tension dans le micro-réseau. En particulier, en essayant de suivre les variations de fréquence et de tension, le PCS va réduire ou augmenter la charge du groupe électrogène qui, en voyant une variation de charge, va changer dynamiquement la fréquence du signal électrique généré pouvant provoquer une instabilité.

Pendant un fonctionnement en régime permanent, le PCS doit injecter une puissance constante afin de fixer le point de fonctionnement du groupe électrogène et assurer une consommation de carburant optimisée du groupe électrogène. Un contrôle rapide approprié doit être mis en œuvre dans le convertisseur afin d'avoir un fonctionnement stable dans un état stable.

Comme le PCS doit fonctionner à puissance constante, toute variation de charge est normalement captée par le groupe électrogène. Cela provoque un transitoire important dans la fréquence et la tension du micro-réseau, perturbant même de manière significative le micro-réseau et le point de fonctionnement du groupe électrogène.

Il est donc important de stabiliser le point de fonctionnement du groupe électrogène, à la fois en régime permanent et pendant le transitoire de charge.

Généralement, un micro-réseau comprenant un groupe électrogène et au moins un PCS est géré avec un système de genstion de l'énergie, aussi appelé « energy management system » en anglais (EMS), en utilisant deux agrégations possibles.

Dans une première agrégation, le groupe électrogène contrôle la tension et la fréquence de fonctionnement isochrone. Le PCS est géré par un EMS comme générateur de courant afin d'optimiser la consommation de diesel. Le groupe électrogène doit toujours fonctionner. Le dimensionnement du système en termes de puissance P est normalement :

$$P_{Genset} > P_{load} > P_{renewable} > P_{PCS}$$

$P_{Genset}$ étant la puissance maximale délivrée du groupe électrogène, $P_{load}$ la puissance maximale requise par la charge, $P_{renewable}$ la puissance maximale délivrée par les sources d'énergie renouvelables, et $P_{PCS}$ la puissance maximale délivrée par le PCS.

Cependant, dans cette première agrégation, le micro-réseau est mis hors tension lorsque le groupe électrogène est éteint, car le PCS n'a pas la capacité de supporter la charge et de stabiliser la tension et la fréquence.

Dans une seconde agrégation, le groupe électrogène et le PCS fonctionnent en parallèle en tant que générateurs de tension. Le groupe électrogène fonctionne de manière isochrone et peut être désactivé. Le PCS est commandé par le système EMS lorsque le groupe électrogène est activé et est isochrone lorsque le groupe électrogène est éteint. Le dimensionnement du système en termes de puissance P est normalement :

$$P_{PCS} \sim P_{Genset} > P_{load}$$

Dans cette deuxième agrégation, en excluant les problèmes de stabilité lorsqu'ils ne sont pas correctement gérés, le micro-réseau pourrait continuer à être alimenté même si le groupe électrogène venait à être éteint.

Malheureusement, en fonctionnement parallèle, chaque transitoire de charge ou variation d'énergie renouvelable provoquera un transitoire de tension et de fréquence et un point de fonctionnement différent pour le groupe électrogène.

Considérant un cas avec des sources d'énergie renouvelables agissant comme des générateurs de courant, seuls les seuils de puissance ou de limitation sont normalement appliqués et rien n'est envisagé pour gérer les transitoires rapides ou pour stabiliser la fréquence et la tension.

Ainsi, lorsque le groupe électrogène fonctionne de manière isochrone, le PCS est commandé par le système EMS afin d'optimiser la consommation de diesel. Mais, toute variation de charge provoquera un transitoire de fréquence et de tension dans le micro-réseau, en raison de la réponse temporelle du contrôle du groupe électrogène.

De plus, une instabilité pourrait apparaître en raison de l'interaction entre le groupe électrogène et le PCS ayant le transitoire de charge comme déclencheur.

Une solution connue qui essaie d'utiliser le système EMS pour adapter la puissance nominale PCS pendant les transitoires de charge, a des retards intrinsèques dus au temps nécessaire pour, premièrement, mesurer la puissance active (qui n'est habituellement pas mesurer par l'EMS mais par un périphérique externe additionnel), deuxièmement, calculer une nouvelle puissance nominale pour le convertisseur et, troisièmement, la transmettre au convertisseur lui-même (s'il y a plus d'un convertisseur, ce délai augmente nettement).

Ces retards réduisent non seulement l'efficacité de cette solution en stabilisation de fréquence et en consommation du groupe mais peuvent également affecter la stabilité du système car si l'action du convertisseur est trop retardée par rapport à l'événement de variation de fréquence, un comportement oscillatoire peut être déclenché.

Les systèmes connus ne parviennent pas à avoir un point de fonctionnement stable du groupe électrogène pendant le transitoire de charge, ce qui entraîne malheureusement une variation importante de la fréquence et de la tension dans le micro-réseau.

Afin de synchroniser et mettre en parallèle deux ou plusieurs sources de tension différentes, une solution typique consiste à utiliser un contrôle de chute tension/fréquence, aussi appelé « droop control » en anglais.

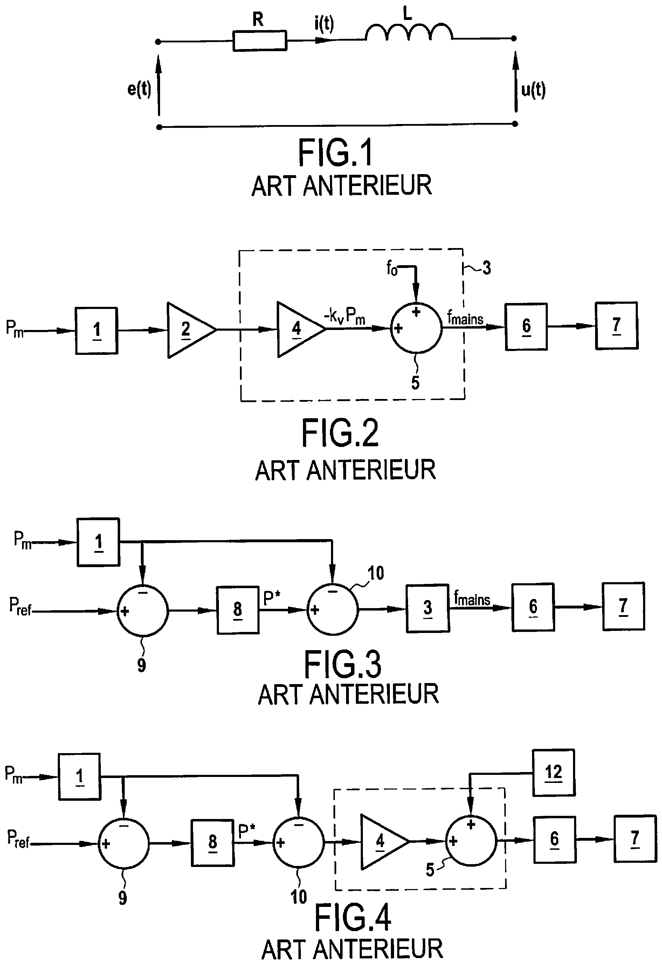

La figure 1 est une représentation schématique simple de deux connexions de sources de tension. Comme le montre la figure 1, la connexion est représentée par deux sources idéales e(t) et u(t) et une impédance inductive entre elles avec une composante de résistance R et une composante d'impédance L.

Pour expliquer la théorie du contrôle de chute, en considérant un régime sinusoïdal, un phaseur, c'est-à-dire une représentation complexe, peut être utilisé pour décrire les tensions, e(t) et u(t), et le courant i(t) du câble de la figure 1.

$$I = \frac{E - U}{Z}$$

où I, E et U indiquent le phaseur du courant ou de la tension respectifs et Z est l'impédance complexe de la ligne électrique. En écrivant les quantités complexes avec la valeur absolue et la représentation de phase, nous avons :

$$E = E e^{-j\varphi_e}$$

$$U = U e^{-j\varphi_u}$$

$$Z = R + j\omega L = Ze^{-j\theta}$$

La puissance complexe S qui circule au début de la ligne est égale à :

$$S = p + jq = \frac{1}{2}E \cdot I^* = \frac{1}{2}Ee^{j\varphi_e}\frac{Ee^{-j\varphi_e} - Ue^{-j\varphi_u}}{Ze^{-j\theta}} = \frac{E^2}{2Z}e^{j\theta} - \frac{E \cdot U}{2Z}e^{j(\varphi+\theta)}$$

où $\varphi = \varphi_e - \varphi_u$, c'est-à-dire où $\varphi$ correspond à la différence de phase entre les deux sources de tension, et où l'opérateur * représente la conjugaison du nombre complexe.

Les parties réelles et imaginaires de S s'écrivent ainsi :

$$P = Re(S) = \frac{E^2}{2Z}\cos(\theta) - \frac{E \cdot U}{2Z}\cos(\varphi + \theta)$$

$$Q = Im(S) = \frac{E^2}{2Z}\sin(\theta) - \frac{E \cdot U}{2Z}\sin(\varphi + \theta)$$

Dans le cas d'une ligne purement inductive, on a $\theta = \frac{\pi}{2}$, et donc :

$$P = Re(S) = \frac{E \cdot U}{2Z}\sin(\varphi)$$

$$Q = Im(S) = \frac{E^2}{2Z} - \frac{E \cdot U}{2Z}\cos(\varphi)$$

Et si la différence de phase $\varphi$ entre les deux sources de tension est petite, alors $\sin(\varphi)\approx\varphi$ et $\cos(\varphi)\approx 1$, ce qui conduit à avoir :

$$P = Re(S) = \frac{E \cdot U}{2Z}\varphi$$

$$Q = Im(S) = \frac{E}{2Z}\Delta E$$

où $\Delta E = E-U$.

A partir des équations ci-dessus, il est clair que dans le cas d'une ligne inductive et d'une petite différence entre les phases des deux sources de tension, la puissance active P échangée dépend principalement de la différence de phase $\varphi$, alors que la puissance réactive Q dépend principalement de la différence d'amplitude de tension $\Delta E$.

Sur la base des équations ci-dessus, il est possible de définir une stratégie de commande locale sans fil, généralement appelée contrôle de statisme, ou « droop control » en anglais, où les équations suivantes, dites par la suite équations de contrôle de chute, s'appliquent à chaque source de tension :

$$f = f_0 - k_f P_m$$

$$V = V_0 - k_V Q_m$$

Où $P_m$ et $Q_m$ sont respectivement la puissance active et la puissance réactive mesurées par l'une des sources de tension, $f_0$ et $V_0$ sont des consignes respectivement de fréquence et de tension, et $k_f$ et $k_V$ sont des coefficients de contrôle, nommés « droop coefficients » en anglais.

Si, par exemple suivant la figure 1, il y a une puissance active de sortie, $\Delta P$, circulant de la source E vers la source U, cela signifie que $\varphi_u > \varphi_e$.

Sur la base des équations de contrôle de statisme, la source E commence à diminuer la fréquence de sortie d'une valeur donnée par $k_f \Delta P$, tandis que la source U, voyant une puissance opposée, $-\Delta P$, augmente sa fréquence de la même quantité. De cette manière, $\varphi_e$ augmente tandis que $\varphi_u$ diminue jusqu'à ce que les phases $\varphi_e$ et $\varphi_u$ des deux sources de tension e(t) et u(t) correspondent.

La figure 2 illustre schématiquement une boucle de régulation de chute de fréquence standard, appelée « Basic Droop » en anglais, qui réalise une caractéristique linéaire négative classique de la fréquence f en fonction de la puissance active $P_m$.

Lorsque cette technique est utilisée pour mettre un convertisseur, comme un PCS par exemple, en parallèle avec le réseau principal, comme un groupe électrogène par exemple, le réseau principal a une amplitude de tension constante et une fréquence constante qui ne dépendent pas de la charge et de la puissance active et/ou réactive fournie.

Dans ces conditions, les équations de statisme de base permettent à elles seules de mettre en parallèle deux ou plusieurs sources mais ne permettent pas de contrôler la puissance échangée entre le convertisseur et le secteur, le convertisseur étant un PCS et le secteur correspondant à un groupe électrogène par exemple. Ceci, parce que la puissance échangée avec le secteur est définie par les équations de statisme en fonction de la différence entre la fréquence du secteur $f_{mains}$ et la tension du secteur $V_{mains}$ et les consignes internes du convertisseur, le PCS, $f_0$ et $V_0$. En effet, si la fréquence du réseau principal, c'est-à-dire la fréquence du secteur $f_{mains}$, n'est, par exemple, pas exactement égale à la fréquence nominale du convertisseur $f_0$, le convertisseur doit échanger une puissance active $P_m$ pour que l'équation de statisme suivante soit vérifiée :

$$f_{mains} = f_0 - k_f P_m$$

Pour expliquer la représentation de la figure 2, la puissance active $P_m$ triphasée mesurée par l'une des sources de tension est délivrée à un filtre passe-bas 1 qui extrait la valeur moyenne de puissance active en supprimant les termes d'oscillations de puissance à 50, 100, 150 Hz. La sortie du filtre passe-bas 1 est traitée par l'opérateur 2 qui délivre l'opposée de la sortie du filtre passe-bas 1, c'est-à-dire le négatif de la sortie du filtre passe-bas 1. La valeur délivrée par l'opérateur négatif 2 est alors envoyée à une boucle de régulation de chute de fréquence standard 3, c'est-à-dire une « basic droop », et en particulier à un module de fonctionnement 4 de la boucle de régulation standard 3 qui détermine une valeur de fréquence correspondante en multipliant un coefficient $k_v$ par la puissance active filtrée négative $P_m$. La fréquence déterminée $-k_V P_m$ est alors transmise à un additionneur 5 de la boucle de régulation 3 configuré pour délivrer une valeur de fréquence $f_{mains}$ résultant de l'addition de la fréquence déterminée $-k_V P_m$ délivrée par le module de fonctionnement 4 avec une fréquence nominale $f_0$. L'additionneur 5 délivre la valeur de fréquence résultante $f_{mains}$ à un intégrateur 6 qui détermine l'angle de référence de tension sinusoïdale PCS, $\theta$, à partir de l'expression de la tension sinusoïdale qui s'exprime selon l'équation $V = V_{ampl}*\sin(\theta)$ avec $V_{ampl}$ correspondant à l'amplitude de la tension.

Pour conserver la caractéristique sans fil du de la boucle de régulation mais ajouter le contrôle de la puissance de sortie échangée, un bloc régulateur externe est ajouté comme cela est illustré sur la figure 3 qui représente schématiquement une boucle de régulation de chute de fréquence standard 3 avec une boucle externe 8 qui fait osciller la caractéristique de statisme P(f) pour suivre la puissance requise.

La puissance active mesurée filtrée $P_m$ est soustraite à une consigne de puissance initiale par le premier comparateur 9 qui délivre le résultat de la différence au bloc régulateur externe 8. Le bloc régulateur externe 8 détermine une variable de puissance P* et la délivre à un second comparateur 10. Le second comparateur 10 calcule les différences entre la variable de puissance P* et la puissance active mesuré filtrée $P_m$. Le résultat de la différence calculée par le second comparateur 10 est alors envoyé à la boucle de régulation standard 3, ou « basic droop », qui détermine la valeur de fréquence comme expliqué en référence à la figure 2 et la délivre à un intégrateur 6 qui détermine l'angle de référence $\theta$ de tension sinusoïdale de l'inverseur.

Le bloc régulateur externe 8 introduit de nouvelles variables dans les équations de contrôle de de statisme, P* et Q*:

$$f = f_0 - k_f(P^* - P_m)$$

$$V = V_0 - k_v(Q^* - Q_m)$$

Ajouter les variables P* et Q* revient à déplacer la consigne de fréquence/tension afin de fournir une puissance différente à la même fréquence/tension de sortie. Le gain intégral du régulateur externe 8 déplace lentement la caractéristique dite de statisme en essayant de correspondre à la puissance demandée.

La solution de contrôle de statisme de base permet de réaliser une mise en parallèle sans fil d'un convertisseur de source de tension avec une autre source de tension, comme par exemple le secteur ou un groupe électrogène, tandis que le régulateur externe ajoute un contrôle lent de la puissance échangée.

Comme dans toute solution de contrôle de ce type, la boucle interne doit être beaucoup plus rapide que la boucle externe. Ainsi, dans le cas par exemple d'une variation de fréquence de sortie, la boucle de régulation de chute 3 réagira d'abord pour suivre la variation de fréquence forçant un échange de puissance pour correspondre à la nouvelle fréquence, puis la boucle de régulation externe 8 intégrera lentement la différence entre la puissance demandée et la puissance mesurée afin de compenser et de restituer la puissance recherchée.

Comme expliqué, la fréquence de sortie du convertisseur correspond sensiblement à la fréquence de sortie qui peut être mesurée et la valeur de l'expression $k_f(P^*-P_m)$ peut être considérée comme une mesure de la variation de fréquence de sortie $\Delta f$ de la valeur nominale $f_0$. Il est clair que cette mesure est retardée car, comme expliqué précédemment, en cas de variation de fréquence de sortie, la différence de phase des sources commence à changer, et donc une puissance est échangée (cette puissance échangée est vue par le convertisseur via une action de filtrage). Les équations de statisme sont appliquées pour réduire la puissance échangée et la garder sous contrôle.

Dans le cas d'une source de variation de fréquence rapide, ce qui peut arriver avec un générateur pouvant atteindre des variations de fréquence de l'ordre de 1-2Hz/s, un échange d'énergie peut se produire pendant les transitions, cet échange étant dû à l'action de filtrage réalisée sur la mesure de la puissance active $P_m$.

Une solution pour atténuer ce problème est illustrée sur la figure 4. Dans cette solution, la consigne de fréquence $f_0$ de l'équation de statisme dans boucle de régulation standard 3 est remplacée par les fréquences de réseau principales mesurées via une boucle à verrouillage de phase rapide 12 (PLL). Dans un tel cas, le terme de statisme $k_f(P^*-P_m)$ n'est plus utilisé pour suivre la fréquence en sortie mais juste pour contrôler la phase entre les sources de tension et la puissance échangée.

D'autres solutions connues de l'état de la technique sont également décrites dans les documents EP 3 485 386, WO 2016/133843, EP 2 731 223, CN 107 294 201 et CN 105 743 130.

Objet et résumé de l'invention

L'invention a pour but de fournir un système et un procédé fournissant un point de fonctionnement stable du groupe électrogène lors de la variation transitoire de charge minimisant la variation de la fréquence et de la tension dans le micro-réseau.

Dans un premier objet de l'invention, il est proposé un procédé de régulation d'un convertisseur, tel qu'un système de contrôle de puissance, pour stabiliser de manière autonome la fréquence dans un micro-réseau auquel le convertisseur est destiné à être connecté, le micro-réseau comprenant un groupe électrogène. Le procédé comprend au moins deux itérations des étapes suivantes :

a) une réception d'une consigne de puissance initiale du convertisseur et d'une estimation d'une puissance active du convertisseur,

b) une détermination d'une première variation de puissance au moins à partir de la différence entre la consigne de puissance initiale et la puissance active estimée,

c) une détermination d'une variable de régulation de puissance à partir de la première variation de puissance,

d) un calcul d'une seconde variation de puissance au moins à partir de la différence entre la variable de régulation de puissance et la puissance active estimée, et

e) une détermination d'une commande de fréquence pour commander le convertisseur à partir de la seconde variation de puissance,

Selon une caractéristique générale du procédé de régulation, le procédé comprend en outre une étape d'amortissement actif comprenant les étapes suivantes:

f) une réception d'une valeur de fréquence caractéristique d'une variation de charge dudit micro-réseau auquel le convertisseur est destiné à être connecté, et

g) une détermination d'une valeur d'amortissement actif sur la base de ladite valeur de fréquence reçue à l'étape f),

la première variation de puissance déterminée à l'étape b) résultant de la consigne de puissance initiale à laquelle on a soustrait la puissance active estimée et la valeur d'amortissement actif.

La fréquence nominale du convertisseur, avec un léger retard, correspond à la fréquence du réseau de sortie.

Par conséquent, tout changement de cette fréquence peut être détecté en regardant le terme en fonction de la seconde variation de puissance, c'est-à-dire le terme $k(P^*-P_m)$ déterminé à partir de la différence entre la variable de régulation de puissance et la puissance active estimée, k étant un coefficient.

Le procédé selon l'invention réalise une gestion complète des transitoires d'une manière plus simple, plus rapide et sans capteur, améliorant constamment la réponse temporelle et réduisant la complexité du système.

En effet, dans un groupe électrogène, une différence entre le couple mécanique du moteur et le couple électrique de l'alternateur provoque un changement de la fréquence qui est mesurée par le variateur de fréquence qui accélère ou décélère le moteur pour correspondre au couple électrique : l'augmentation de la puissance active de sortie force une augmentation du couple électrique et en conséquence une chute de fréquence, et vice versa.

Ainsi, le procédé selon l'invention utilise la mesure de la fréquence du réseau comme moyen indirect de mesurer une variation de charge, basée sur la caractéristique du groupe électrogène, et l'utilise pour modifier la puissance nominale active du convertisseur pour attraper la charge et éviter un changement du point de fonctionnement du groupe électrogène.

De cette manière, la variation de charge est principalement perçue par le convertisseur qui peut réagir rapidement et réduire l'effet de variation de charge sur le groupe électrogène : avec une moindre variation de charge, la fréquence du groupe électrogène est moins affectée et son point de fonctionnement également.

Le procédé selon l'invention permet de réduire automatiquement les transitoires de charge perçus par le groupe électrogène et par conséquent d'optimiser sa consommation de carburant et de stabiliser la fréquence du micro-réseau même en transitoire. Aucun capteur externe ni aucune logique dédiée ni aucun bus de communication haut débit ne sont nécessaires car le convertisseur met à jour de manière dynamique sa référence de puissance active en suivant les variations de charge du micro-réseau.

Par rapport à une technique de réduction de pic basée sur des mesures, l'invention évite la mesure directe de la puissance active du micro-réseau. Dans les solutions antérieures connues, cette mesure est généralement effectuée soit par des systèmes de mesure indépendants, soit par le convertisseur lui-même à l'aide de capteurs externes.

L'invention peut également être appliquée à la commande d'onduleurs d'énergie renouvelable (fonctionnant habituellement en courant) pour assurer une stabilisation supplémentaire du réseau : dans une application de micro-réseau, les source d'énergie renouvelable ne fonctionnent généralement pas au point de fonctionnement maximum mais sont limitées à l'équilibre de puissance entre la charge et l'état de charge des batteries si bien qu'une puissance supplémentaire est souvent disponible. Le convertisseur peut automatiquement agir comme un stabilisateur de fréquence/tension pendant les transitoires du réseau en maintenant en régime permanent la consigne souhaitée.

Dans un premier mode de mise en œuvre du procédé de régulation, la détermination de la commande de fréquence à l'étape e) comprend une détermination d'une variation de fréquence à partir de la seconde variation de puissance, et l'ajout d'une fréquence nominale du convertisseur à la variation de fréquence, la valeur de fréquence reçue à l'étape f) correspondant à ladite variation de fréquence déterminée à partir de la seconde variation de puissance.

Dans ce premier mode de mise en œuvre, le terme $k(P^*-P_m)$ est utilisé pour détecter des variations de fréquence. S'il y a une variation positive, cela signifie que la fréquence du groupe électrogène augmente, ce qui signifie, en fonction des équations du groupe électrogène, que la charge du micro-réseau diminue, donc l'amortissement actif agit comme un régulateur proportionnel basé sur le terme $k(P^*-P_m)$ diminue la consigne de puissance initiale du convertisseur en réduisant sa puissance active de sortie pour compenser la diminution de la charge et réduire la variation de charge vue par le groupe électrogène.

Dans ce premier mode de mise en œuvre, les variations de fréquence sont détectées avec un retard intrinsèque car le terme $k(P^*-P_m)$ dépend de la mesure de puissance active $P_m$ qui résulte d'une action de filtrage interne.

Dans un deuxième mode de mise en œuvre du procédé de régulation, le procédé comprend en une mesure de la fréquence réseau du micro-réseau avec une boucle à verrouillage de phase (PLL), et un calcul d'une première variation de fréquence à partir de la différence entre ladite mesure de la fréquence réseau et une fréquence nominale du convertisseur, la valeur de fréquence reçue à l'étape f) correspondant à ladite première variation de fréquence, la seconde variation de puissance calculée à l'étape d) résultant de la soustraction de la puissance active estimée et de la valeur d'amortissement actif à la variable de régulation de puissance, la détermination de la commande de fréquence à l'étape e) comprenant une détermination d'une seconde variation de fréquence à partir de la seconde variation de puissance, et la fréquence réseau mesurée étant ajoutée à la seconde variation de fréquence pour déterminer la commande de fréquence à l'étape e).

Dans ce deuxième mode de mise en œuvre, premièrement, la boucle PLL est beaucoup plus rapide pour suivre les variations de fréquence du groupe électrogène, de sorte que la variation de la charge est vue plus tôt, réduisant les transitions de charge du groupe électrogène.

Deuxièmement, dans le cas où l'amortissement actif demande un écart de puissance dépassant un seuil défini (lié par exemple à la puissance nominale du convertisseur ou à l'état de charge de la batterie), il est saturé : dans ce cas, la caractéristique d'amortissement actif est gelée, et la boucle PLL est utilisée pour suivre rapidement les variations de fréquence du groupe électrogène afin de mieux contrôler la puissance de sortie du convertisseur et éviter de dépasser le seuil de puissance défini.

Pour mieux comprendre la solution PLL, il est utile d'écrire la fréquence du convertisseur :

$$\omega_{inv} = 2\pi f_{PLL} + 2\pi k_P \left(P^* - P_m - P_{damping}\right)$$

or

$$\omega_{inv} = 2\pi f_{PLL} + 2\pi k_P \left(P^* - P_m - k_D(2\pi f_{PLL} - \omega_0)\right)$$

or

$$\omega_{inv} = 2\pi k_P k_D \omega_0 + 2\pi f_{PLL}(1 - 2\pi k_P k_D) + 2\pi k_P(P^* - P_m)$$

avec $\omega_{inv}$ la fréquence angulaire de l'onduleur, $P_{damping}$ la valeur d'amortissement actif, et $k_D$ le coefficient d'amortissement pour déterminer la valeur d'amortissement actif à partir de la variation de fréquence déterminée.

A partir de l'équation écrite ci-dessus, il est clair que le dernier terme est le terme de statisme «modifié» standard, ou « droop term » en anglaise, déjà décrit tandis que si le facteur d'amortissement est choisi comme $k_D = \dfrac{1}{2\pi k_P}$ l'équation se simplifie à la celle correspondant au schéma de la figure 4.

La méthode de régulation peut également être utilisée dans le cas d'une configuration de contrôleur en mode courant, comme les solutions de stockage auxiliaire. Dans ce cas, la PLL, utilisée pour synchroniser la référence du contrôleur de courant avec la tension de sortie, est également utilisée pour mesurer la différence de tension par rapport à sa consigne nominale ou une valeur filtrée élevée de la fréquence de sortie : l'erreur est utilisée pour réaliser l'algorithme proposé agissant sur la puissance nominale active de l'onduleur.

Dans un deuxième objet de l'invention, il est proposé un système de régulation d'un convertisseur conçu pour stabiliser de manière autonome la fréquence dans un micro-réseau auquel le convertisseur est destiné à être connecté, le micro-réseau comprenant un groupe électrogène. Le système de régulation comprend :

- un premier module recevant une consigne de puissance initiale du convertisseur et une estimation d'une puissance active du convertisseur,
- un bloc régulateur externe relié à la sortie du premier module et délivrant une variable de régulation de puissance,
- un deuxième module configuré pour calculer une seconde variation de puissance en soustrayant la puissance active estimée du convertisseur à la variable de régulation de puissance, et
- un bloc de statisme, ou « basic droop block » en anglais, configuré pour calculer une variation de fréquence basée sur la seconde variation de puissance et fournir une valeur de commande de fréquence pour commander le convertisseur à partir de la seconde variation de puissance,

Selon une caractéristique générale du système de régulation, le système de régulation comprend en outre un bloc d'amortissement actif configuré pour :

- recevoir sur une entrée une valeur de fréquence caractéristique d'une variation de charge dudit micro-réseau auquel le convertisseur est destiné à être connecté, et
- délivrer au premier module une valeur d'amortissement actif déterminée à partir de la valeur de fréquence reçue en entrée,

le premier module étant configuré pour délivrer une première variation de puissance résultant de la soustraction de la puissance active mesurée et de la valeur d'amortissement actif à la puissance initiale de référence.

Dans un premier mode de réalisation du système de régulation, le bloc de statisme comprend un module configuré pour calculer une variation de fréquence à partir de la deuxième variation de puissance et un additionneur configuré pour calculer la commande de fréquence en additionnant une fréquence nominale du convertisseur à ladite variation de fréquence, le bloc de statisme délivrant la variation de fréquence déterminée par ledit module directement sur ladite entrée du bloc d'amortissement actif.

Dans un second mode de réalisation du système de régulation, le système peut comprendre en outre une boucle à verrouillage de phase configurée pour mesurer la fréquence réseau du micro-réseau, et un troisième module configuré pour calculer une différence entre ladite fréquence réseau et une fréquence nominale du convertisseur, le troisième module délivrant la différence calculée sur ladite entrée du bloc d'amortissement actif, et la boucle à verrouillage de phase alimentant le bloc de statisme avec la fréquence réseau mesurée, le bloc de statisme comprenant un module configuré pour calculer une variation de fréquence à partir de la deuxième variation de puissance et un additionneur configuré pour ajouter la fréquence réseau mesurée à la variation de fréquence déterminée par ledit module pour déterminer la commande de fréquence.

Brève description des dessins

L'invention sera mieux comprise à la lecture faite ci-après, à titre indicatif mais non limitatif, en référence aux dessins annexés sur lesquels :

- la figure 1, déjà décrite, présente schématiquement le couplage électrique de deux sources de tension selon l'état de la technique ;
- la figure 2, déjà décrite, illustre schématiquement une boucle de statisme standard selon l'état de la technique ;
- la figure 3, déjà décrite, représente schématiquement une boucle de statisme standard avec une boucle de régulation externe selon l'état de la technique ;
- la figure 4, déjà décrite, représente schématiquement une boucle de statisme modifiée à l'aide d'une boucle à verrouillage de phase ;
- la figure 5 présente un organigramme d'un procédé de régulation selon un premier mode de mise en œuvre de l'invention ;
- la figure 6 présente un organigramme d'un procédé de régulation selon un second mode de mise en œuvre de l'invention ;
- la figure 7 illustre schématiquement un système de régulation selon un premier mode de réalisation de l'invention ;
- la figure 8 illustre schématiquement un système de régulation selon un second mode de réalisation de l'invention.

Description détaillée de modes de réalisation

La présente invention sera décrite en relation avec des modes de réalisation particuliers et en se référant à certaines figures mais l'invention n'est pas limitée à ceux-ci mais seulement par les revendications. Les figures décrites sont seulement schématiques et ne sont pas limitatives. Dans les figures, la taille de certains des éléments peut être exagérée et non dessinée à l'échelle à des fins d'illustration. Lorsque le terme « comprenant » est utilisé dans la présente description et les revendications, il n'exclut pas d'autres éléments ou étapes. Lorsqu'un article indéfini ou défini est utilisé pour désigner un nom singulier, par ex. « un » ou « une », « le » ou « la », ceci inclut un pluriel de ce nom à moins que quelque chose d'autre ne soit spécifiquement spécifié.

Le terme « comprenant », utilisé dans les revendications, ne doit pas être interprété comme étant limité aux moyens énumérés ci-après ; il n'exclut pas d'autres éléments ou étapes. Ainsi, la portée de l'expression « un dispositif comprenant des moyens A et B » ne doit pas être limitée aux dispositifs constitués uniquement des composants A et B. Cela signifie que, par rapport à la présente invention, les seuls composants pertinents du dispositif sont A et B.

De plus, les termes premier, deuxième, troisième et similaire dans la description et dans les revendications, sont utilisés pour faire la distinction entre des éléments similaires et pas nécessairement pour décrire un ordre séquentiel ou chronologique. Il doit être compris que les termes ainsi utilisés sont interchangeables dans des circonstances appropriées et que les modes de réalisation de l'invention décrits ici sont capables de fonctionner dans d'autres séquences que celles décrites ou illustrées ici.

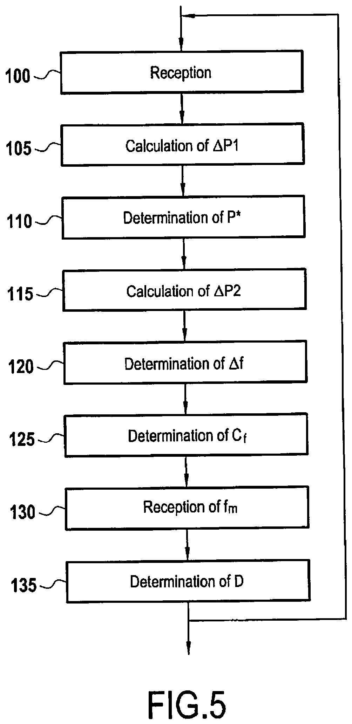

Sur la figure 5 est présenté schématiquement un organigramme d'un premier mode de mise en œuvre d'un procédé de régulation d'un convertisseur, tel qu'un système de contrôle de puissance, pour stabiliser de manière autonome la fréquence dans un micro-réseau auquel le convertisseur est destiné à être connecté, le micro-réseau comprenant un groupe électrogène.

Dans ce premier mode de mise en œuvre du procédé de régulation, le procédé comprend une première étape 100 de réception d'une consigne de puissance initiale $P_{ref}$ du convertisseur et d'une estimation d'une puissance active $P_m$ du convertisseur.

Dans une deuxième étape 105 de la méthode de régulation, une première variation de puissance $\Delta P1$ est déterminée en calculant la différence entre la consigne de puissance initiale $P_{ref}$ et la puissance active estimée $P_m$.

Dans une troisième étape 110 du procédé de régulation, une variable de régulation de puissance $P^*$ est déterminée à partir de la première variation de puissance $\Delta P1$.

Dans une quatrième étape 115 du procédé de régulation, une seconde variation de puissance $\Delta P2$ est calculée à partir de la différence entre la variable de régulation de puissance $P^*$ et la puissance active estimée $P_m$.

Dans une cinquième étape 120 de la méthode de régulation, une variation de fréquence $\Delta f$ est déterminée à

partir de la deuxième variation de puissance $\Delta P2$.

Dans une sixième étape 125 du procédé de régulation, une commande de fréquence $C_f$ pour commander le convertisseur est déterminée à partir de la variation de fréquence déterminée $\Delta f$.

Dans une septième étape 130 du procédé de régulation, un bloc d'amortissement actif reçoit la variation de fréquence déterminée $\Delta f$ comme valeur de fréquence d'entrée $f_{in}$.

Et dans une huitième étape 135 du procédé de régulation, une valeur d'amortissement actif D est déterminée à partir de la valeur de fréquence d'entrée $f_{in}$.

Après cette huitième étape 135, la méthode de régulation est réitérée. Lors de l'itération suivante du procédé de régulation:

- la première variation de puissance $\Delta P1$ déterminée à la deuxième étape 105 est calculée en soustrayant la puissance active estimée $P_m$ et la valeur d'amortissement actif D de la consigne de puissance initiale $P_{ref}$;
- la commande de fréquence $C_f$ est déterminée à la sixième étape 125 en ajoutant une fréquence nominale $f_0$ du convertisseur à la variation de fréquence $\Delta f$ ; et
- la valeur de fréquence d'entrée reçue par le bloc d'amortissement actif est transmise directement depuis un bloc déterminant ladite variation de fréquence $\Delta f$ à partir de la deuxième variation de puissance $\Delta P2$, ce dernier bloc délivrant la variation de fréquence $\Delta f$ à l'additionneur déterminant la commande de fréquence $C_f$ à l'étape 125.

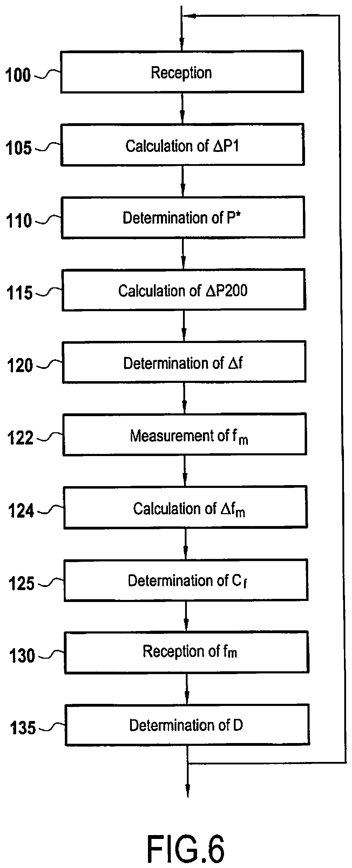

Sur la figure 6 est présentée un organigramme d'un second mode de mise en œuvre d'un procédé de régulation d'un convertisseur, tel qu'un système de contrôle de puissance, pour stabiliser de manière autonome la fréquence dans un micro-réseau auquel le convertisseur est destiné à être connecté, le micro-réseau comprenant un groupe électrogène.

Les étapes du second mode de mise en œuvre du procédé de régulation illustré sur la figure 6 identiques aux étapes du premier mode de mise en œuvre du procédé de régulation illustré sur la figure 5 portent les mêmes références numériques.

Le second mode de mise en œuvre du procédé de régulation illustré sur la figure 6 diffère du premier mode de mise en œuvre du procédé de régulation illustré sur la figure 5 en ce que :

- il comprend une première étape supplémentaire 122 dans laquelle la fréquence réseau de micro-réseau $f_m$ est mesurée avec une boucle à verrouillage de phase,
- il comprend également une deuxième étape supplémentaire 124 dans laquelle est calculée une différence $\Delta f_m$ entre ladite mesure de la fréquence réseau $f_m$ et une fréquence nominale $f_0$ du convertisseur,
- la fréquence réseau mesurée $f_m$ est ajoutée à la variation de fréquence déterminée $\Delta f_m$ pour déterminer la commande de fréquence $C_f$ à la sixième étape 125,
- la différence calculée à la deuxième étape additionnelle 124 étant utilisée comme valeur de fréquence d'entrée reçue à la septième étape 130, et
- la deuxième variation de puissance $\Delta P200$ calculée à la quatrième étape 115 résulte de la variable de régulation de puissance $P*$ à laquelle a été soustraite la puissance active estimée $P_m$ et la valeur d'amortissement actif D.

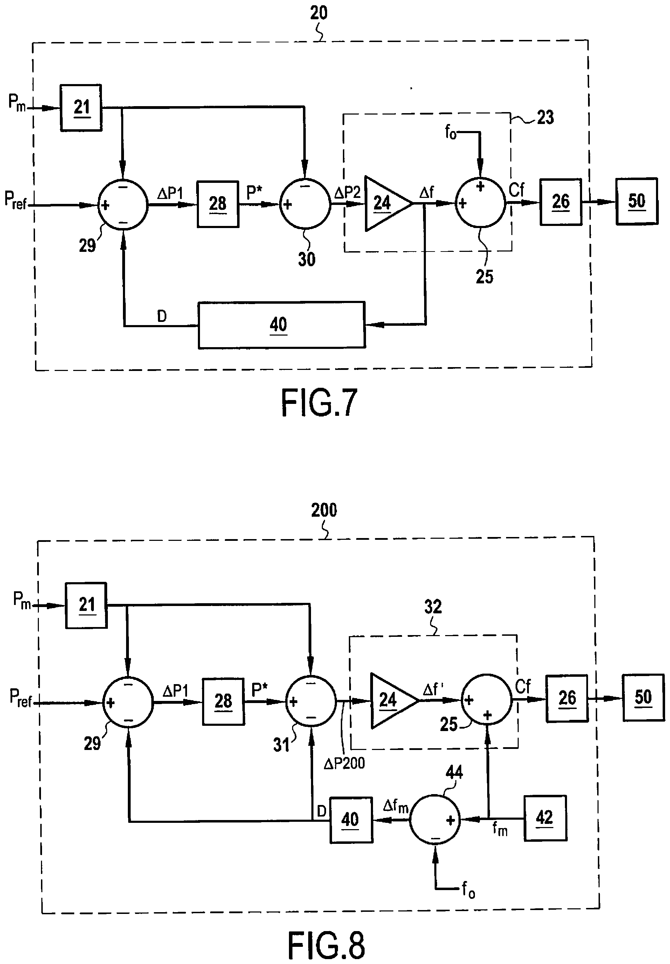

Sur la figure 7 est illustrée schématiquement un système de régulation 20 d'un convertisseur électrique 50, tel qu'un système de conversion de puissance (PCS), selon un premier mode de réalisation de l'invention. Le système de régulation est conçu pour stabiliser de manière autonome la fréquence dans un micro-réseau auquel le convertisseur est destiné à être connecté, le micro-réseau comprenant un groupe électrogène. Le premier mode de réalisation du système de régulation 20 est configuré pour réaliser le premier mode de mise en œuvre du procédé de régulation illustré sur la figure 5.

Dans ce premier mode de réalisation du système de régulation, le système 20 comprend un premier module 29 recevant une consigne de puissance initiale $P_{ref}$ du PCS 50, une mesure d'une puissance active $P_m$ du PCS 50 filtrée par un filtre passe-bas 21, et une valeur d'amortissement actif D d'un bloc d'amortissement actif 40. Le premier module 29 calcule une première variation de puissance $\Delta P1$ en soustrayant les valeurs de la puissance active mesurée $P_m$ filtrée et de la valeur d'amortissement actif D à la consigne de puissance initiale $P_{ref}$.

Le système 20 comprend en outre un bloc régulateur externe 28 couplé à la sortie du premier module 21. Le bloc régulateur externe 28 détermine une variable de régulation de puissance $P*$ à partir de la première variation de puissance $\Delta P1$ en appliquant une correction intégrale sur la première variation de puissance $\Delta P1$.

Le système 20 comprend également un deuxième module 30 recevant la variable de régulation de puissance $P*$ et la puissance active mesuré filtrée $P_m$ du PCS 50. Le deuxième module 30 est configuré pour calculer une seconde variation de puissance $\Delta P2$ en calculant la différence entre la variable de régulation de puissance $P*$ et la puissance active mesurée filtrée $P_m$.

Le système 20 comprend un bloc de statisme 23, ou « basic droop block » en anglais, qui comprend un opérateur 24 configuré pour calculer une variation de fréquence $\Delta f$ à partir de la deuxième variation de puissance $\Delta P2$ et un

additionneur 25 configuré pour déterminer une commande de fréquence $C_f$ pour commander le PCS 50 à partir du résultat de l'addition entre la variation de fréquence $\Delta f$ et la fréquence nominale $f_0$. Le bloc de statisme 23 délivre la commande de fréquence $C_f$ à un intégrateur 26, la commande de fréquence $C_f$ correspondant à l'angle de référence de tension sinusoïdal de l'onduleur $\theta$.

Le bloc d'amortissement actif 40 reçoit comme valeur de fréquence d'entrée la variation de fréquence $\Delta f$ calculée par l'opérateur 24 du bloc de statisme 23. Comme déjà expliqué ci-dessus, le bloc d'amortissement actif 40 est configuré pour déterminer une valeur d'amortissement actif D à partir d'une correction proportionnelle de la fréquence d'entrée et délivre la valeur d'amortissement actif D au premier module 29. Comme expliqué précédemment, une variation de charge provoque une variation de fréquence du groupe électrogène due aux caractéristiques intrinsèques du groupe électrogène : le bloc d'amortissement 40 essaie de reconstruire la variation de charge à partir de la variation de fréquence du PCS afin de modifier la consigne PCS en fonction de la charge et de minimiser la variation de charge vue par le groupe électrogène.

Sur la figure 8 est illustrée schématiquement un système de régulation 200 d'un convertisseur électrique 50, tel qu'un PCS, selon un second mode de réalisation de l'invention. Le système de régulation est conçu pour stabiliser de manière autonome la fréquence dans un micro-réseau auquel le convertisseur est destiné à être connecté, le micro-réseau comprenant un groupe électrogène. Le second mode de réalisation du système de régulation 200 est configuré pour réaliser le second mode de mise en oeuvre du procédé de régulation illustré sur la figure 6.

Les éléments du second mode de réalisation du système de régulation 200 identiques aux éléments du premier mode de réalisation du système de régulation 20 portent les mêmes références numériques.

Le second mode de réalisation du système de régulation 200 illustré sur la figure 8 diffère du premier mode de réalisation du système de régulation 20 illustré sur la figure 7 en ce que le deuxième module 30 du premier mode de réalisation est remplacé par un premier module 31 recevant non seulement la variable de régulation de puissance P* et la puissance active mesurée $P_m$ filtrée du PCS 50, mais également la valeur d'amortissement actif D. Le premier module 31 est configuré pour calculer une deuxième variation de puissance $\Delta P200$ en soustrayant la puissance active mesurée filtrée $P_m$ et la valeur de l'amortissement actif D à la variable de régulation de puissance P* déterminée par le bloc régulateur externe 28.

Le second mode de réalisation du système de régulation 200 diffère également du premier mode de réalisation 20 en ce qu'il comprend un système à boucle à verrouillage de phase 42 (PLL) configuré pour mesurer la fréquence réseau du micro-réseau $f_m$, et un troisième module 44 configuré pour calculer la différence $\Delta f_m$ entre la fréquence réseau mesurée $f_m$ et une fréquence nominale $f_0$ du PCS 50. Le bloc amortisseur actif 40 reçoit en entrée la différence $\Delta f_m$ calculée par le troisième module 44.

Le second mode de réalisation du système de régulation 200 diffère également du premier mode de réalisation 20 en ce que l'additionneur 25 du bloc de statisme 23 reçoit la fréquence réseau du micro-réseau $f_m$ mesurée au lieu d'une fréquence nominale $f_0$ et une variation de fréquence $\Delta f'$ qui est déterminée à partir de la deuxième variation de puissance $\Delta P200$, puis calcule la commande de fréquence $C_f$ en ajoutant la fréquence réseau mesurée $f_m$ à la variation de fréquence déterminée $\Delta f'$.

Le procédé de régulation et le système de régulation selon l'invention permettent de gérer la disponibilité discontinue de ressources renouvelables ou la variation des charges ainsi que d'optimiser le point de fonctionnement du groupe électrogène (économie de carburant). Il fournit également une redondance afin d'avoir un fonctionnement à sécurité intégrée du système sans aucun point de défaillance unique.

De plus, l'invention fournit une capacité de fonctionnement autonome, facilite la transition de fonctionnement autonome transitoire et fournit un contrôle de fréquence pendant le transitoire de charge.

En outre, l'invention permet de faire fonctionner le système de gestion d'énergie en ne mettant en place que le point de fonctionnement en régime permanent, avec un réseau de communication lent. Avec l'invention, il n'y a pas de contrainte sur la position dans le micro-réseau et la distance entre le PCS, le groupe électrogène et le système de gestion de l'énergie (EMS).

L'invention peut également être appliquée à la commande d'onduleurs d'énergie renouvelable (fonctionnant habituellement comme des générateurs de courant) pour assurer une stabilisation supplémentaire du réseau.

## Revendications

**1.** Procédé de régulation d'un convertisseur, tel qu'un système de contrôle de puissance, pour stabiliser de manière autonome la fréquence dans un micro-réseau auquel le convertisseur est destiné à être connecté, le micro-réseau comprenant un groupe électrogène, le procédé comprenant au moins deux itérations des étapes suivantes :

   a) une réception (100) d'une consigne de puissance initiale ($P_{ref}$) du convertisseur et d'une estimation d'une puissance active ($P_m$) du convertisseur,

b) une détermination (105) d'une première variation de puissance (ΔP1) au moins à partir de la différence entre la consigne de puissance initiale ($P_{ref}$) et la puissance active estimée ($P_m$),

c) une détermination (110) d'une variable de régulation de puissance (P*) à partir de la première variation de puissance (ΔP1),

d) un calcul (115) d'une seconde variation de puissance (ΔP2, ΔP200) au moins à partir de la différence entre la variable de régulation de puissance (P*) et la puissance active estimée ($P_m$), et

e) une détermination (125) d'une commande de fréquence ($C_f$) pour commander le convertisseur à partir de la seconde variation de puissance (ΔP2, ΔP200),

**caractérisé en ce que** le procédé comprend en outre une étape d'amortissement actif comprenant les étapes suivantes :

f) une réception (130) d'une valeur de fréquence (Δf, $\Delta f_m$) caractéristique d'une variation de charge dudit micro-réseau auquel le convertisseur est destiné à être connecté, et

g) une détermination (135) d'une valeur d'amortissement actif (D) à partir de la valeur de fréquence reçue (Δf, $\Delta f_m$) à l'étape f),

la première variation de puissance (ΔP1) déterminée à l'étape b) résultant de la consigne de puissance initiale ($P_{ref}$) à laquelle on a soustrait la puissance active estimée ($P_m$) et la valeur d'amortissement actif (D).

2. Procédé selon la revendication 1, dans lequel la détermination de la commande de fréquence ($C_f$) à l'étape e) comprend une détermination (120) d'une variation de fréquence (Δf) à partir de la seconde variation de puissance (ΔP2), et l'ajout d'une fréquence nominale ($f_0$) du convertisseur à la variation de fréquence (Δf), la valeur de fréquence reçue à l'étape f) correspondant à ladite variation de fréquence (Δf) déterminée à partir de la seconde variation de puissance (ΔP2).

3. Procédé selon la revendication 1, comprend en outre une mesure de la fréquence réseau ($f_m$) du micro-réseau avec une boucle à verrouillage de phase, et un calcul d'une première variation de fréquence ($\Delta f_m$) à partir de la différence entre ladite mesure de la fréquence réseau ($f_m$) et une fréquence nominale ($f_0$) du convertisseur, la valeur de fréquence reçue à l'étape f) correspondant à ladite première variation de fréquence ($\Delta f_m$), la seconde variation de puissance (ΔP200) calculée à l'étape d) résultant de la soustraction de la puissance active estimée ($P_m$) et de la valeur d'amortissement actif (D) à la variable de régulation de puissance (P*), la détermination de la commande de fréquence ($C_f$) à l'étape e) comprenant une détermination (120) d'une seconde variation de fréquence (Δf') à partir de la seconde variation de puissance (ΔP200), et la fréquence réseau mesurée ($f_m$) étant ajoutée à la seconde variation de fréquence (Δf') pour déterminer la commande de fréquence ($C_f$) à l'étape e).

4. Système de régulation (20, 200) d'un convertisseur (50) conçu pour stabiliser de manière autonome la fréquence dans un micro-réseau auquel le convertisseur (50) est destiné à être connecté, le micro-réseau comprenant un groupe électrogène, le système de régulation (20, 200) comprenant :

- un premier module (29) recevant une consigne de puissance initiale ($P_{ref}$) du convertisseur (50) et une estimation d'une puissance active ($P_m$) du convertisseur (50),
- un bloc régulateur externe (28) couplé à la sortie du premier module (29) et délivrant une variable de régulation de puissance (P*),
- un deuxième module (30, 31) configuré pour calculer une seconde variation de puissance (ΔP2, ΔP200) en soustrayant la puissance active estimée ($P_m$) du convertisseur (50) à la variable de régulation de puissance (P*), et
- un bloc de statisme (23, 32) configuré pour déterminer une commande de fréquence ($C_f$) pour commander le convertisseur (50) à partir de la seconde variation de puissance (ΔP2, ΔP200), **caractérisé en ce que** le système de régulation (20, 200) comprend en outre un bloc d'amortissement actif (40) configuré pour :
- recevoir sur une entrée une valeur de fréquence (Δf, $\Delta f_m$) caractéristique d'une variation de charge dudit micro-réseau auquel le convertisseur (50) est destiné à être connecté, et
- délivrer au premier module (29) une valeur d'amortissement actif (D) déterminée à partir de la valeur de fréquence (Δf, $\Delta f_m$) reçue en entrée,

le premier module (29) étant configuré pour délivrer une première variation de puissance (ΔP1) résultant de la soustraction de la puissance active mesurée ($P_m$) et de la valeur d'amortissement actif (D) à la puissance initiale de référence ($P_{ref}$).

**5.** Système de régulation (20) selon la revendication 4, dans lequel le bloc de statisme (23) comprend un module (24) configuré pour calculer une variation de fréquence (Δf) à partir de la deuxième variation de puissance (ΔP2) et un additionneur (25) configuré pour calculer la commande de fréquence ($C_f$) en additionnant une fréquence nominale ($f_0$) du convertisseur (50) à ladite variation de fréquence (Δf), le bloc de statisme (23) délivrant la variation de fréquence (Δf) déterminée par ledit module (24) directement sur ladite entrée du bloc d'amortissement actif (40).

**6.** Système de régulation (200) selon la revendication 4, comprenant en outre une boucle à verrouillage de phase (42) configurée pour mesurer la fréquence réseau ($f_m$) du micro-réseau, et un troisième module (44) configuré pour calculer une différence ($Δf_m$) entre ladite fréquence réseau ($f_m$) et une fréquence nominale ($f_0$) du convertisseur (50), le troisième module (44) délivrant la différence ($Δf_m$) calculée sur ladite entrée du bloc d'amortissement actif (40), et la boucle à verrouillage de phase (42) alimentant le bloc de statisme (32) avec la fréquence réseau mesurée ($f_m$), le bloc de statisme (32) comprenant un module (24) configuré pour calculer une variation de fréquence (Δf') à partir de la deuxième variation de puissance (ΔP200) et un additionneur (25) configuré pour ajouter la fréquence réseau mesurée ($f_m$) à la variation de fréquence (Δf') déterminée par ledit module (24) pour déterminer la commande de fréquence ($C_f$).

**Patentansprüche**

**1.** Verfahren zur Regelung eines Konverters, wie etwa eines Systems zur Leistungsregelung, zum autonomen Stabilisieren der Frequenz in einem Inselnetz, mit dem der Konverter verbunden werden soll, wobei das Inselnetz ein Stromaggregat umfasst, wobei das Verfahren mindestens zwei Wiederholungen der folgenden Schritte umfasst:

a) einen Empfang (100) eines Sollwerts der Anfangsleistung ($P_{ref}$) des Konverters und einer Schätzung einer Wirkleistung ($P_m$) des Konverters,
b) eine Bestimmung (105) einer ersten Leistungsänderung (ΔP1) zumindest aus der Differenz zwischen dem Sollwert der Anfangsleistung ($P_{ref}$) und der geschätzten Wirkleistung ($P_m$),
c) eine Bestimmung (110) einer Stellgröße der Leistung (P*) aus der ersten Leistungsänderung (ΔP1),
d) eine Berechnung (115) einer zweiten Leistungsänderung (ΔP2, ΔP200) zumindest aus der Differenz zwischen der Stellgröße der Leistung (P*) und der geschätzten Wirkleistung ($P_m$), und
e) eine Bestimmung (125) einer Frequenzsteuerung ($C_f$), um den Konverter ab der zweiten Leistungsänderung (ΔP2, ΔP200) zu steuern,

dadurch gekennzeichnet, dass das Verfahren ferner einen Schritt der aktiven Dämpfung, umfassend die folgenden Schritte, umfasst:

f) einen Empfang (130) eines Frequenzwerts (Δf, $Δf_m$), der für eine Laständerung des Inselnetzes charakteristisch ist, mit dem der Konverter verbunden werden soll, und
g) eine Bestimmung (135) eines Werts (D) der aktiven Dämpfung aus dem in Schritt f) empfangenen Frequenzwert (Δf, $Δf_m$),

wobei sich die in Schritt b) bestimmte erste Leistungsänderung (ΔP1) aus dem Sollwert der Anfangsleistung ($P_{ref}$) ergibt, von dem die geschätzte Wirkleistung ($P_m$) und der Wert (D) der aktiven Dämpfung subtrahiert wurden.

**2.** Verfahren nach Anspruch 1, wobei die Bestimmung der Frequenzsteuerung ($C_f$) in Schritt e) eine Bestimmung (120) einer Frequenzänderung (Δf) aus der zweiten Leistungsänderung (ΔP2) und das Addieren einer Nennfrequenz ($f_0$) des Konverters zu der Frequenzänderung (Δf) umfasst, wobei der in Schritt f) empfangene Frequenzwert der aus der zweiten Leistungsänderung (ΔP2) bestimmten Frequenzänderung (Δf) entspricht.

**3.** Verfahren nach Anspruch 1, ferner umfassend eine Messung der Netzfrequenz ($f_m$) des Inselnetzes mit einer Phasenregelschleife, und eine Berechnung einer ersten Frequenzänderung ($Δf_m$) aus der Differenz zwischen der Messung der Netzfrequenz ($f_m$) und einer Nennfrequenz ($f_0$) des Konverters, wobei der in Schritt f) empfangene Frequenzwert der ersten Frequenzänderung ($Δf_m$) entspricht, wobei sich die in Schritt d) berechnete zweite Leistungsänderung (ΔP200) aus der Subtraktion der geschätzten Wirkleistung ($P_m$) und des Werts (D) der aktiven Dämpfung von der Stellgröße der Leistung (P*) ergibt, wobei die Bestimmung der Frequenzsteuerung ($C_f$) in Schritt e) eine Bestimmung (120) einer zweiten Frequenzänderung (Δf') aus der zweiten Leistungsänderung (ΔP200) umfasst, und die gemessene Netzfrequenz ($f_m$) zu der zweiten Frequenzänderung (Δf') addiert wird, um die Frequenzsteuerung ($C_f$) in Schritt e) zu bestimmen.

EP 3 729 598 B1

4. System (20, 200) zur Regelung eines Konverters (50), der konzipiert ist, um die Frequenz in einem Inselnetz autonom zu stabilisieren, mit dem der Konverter (50) verbunden werden soll, wobei das Inselnetz ein Stromaggregat umfasst, wobei das Regelsystem (20, 200) umfasst:

- ein erstes Modul (29), das einen Sollwert der Anfangsleistung ($P_{ref}$) des Konverters (50) und eine Schätzung einer Wirkleistung ($P_m$) des Konverters (50) empfängt,
- einen externen Steuerblock (28), der an den Ausgang des ersten Moduls (29) gekoppelt ist und eine Stellgröße der Leistung (P*) liefert,
- ein zweites Modul (30, 31), das dazu ausgestaltet ist, eine zweite Leistungsänderung ($\Delta$P2, $\Delta$P200) zu berechnen, indem die geschätzte Wirkleistung ($P_m$) des Konverters (50) von der Stellgröße der Leistung (P*) subtrahiert wird, und
- einen Statikblock (23, 32), der dazu ausgestaltet ist, eine Frequenzsteuerung ($C_f$) zu bestimmen, um den Konverter (50) ab der zweiten Leistungsänderung ($\Delta$P2, $\Delta$P200) zu steuern,

**dadurch gekennzeichnet, dass** das Regelsystem (20, 200) ferner einen Block (40) zur aktiven Dämpfung umfasst, der dazu ausgestaltet ist:

- an einem Eingang einen Frequenzwert ($\Delta$f, $\Delta f_m$) zu empfangen, der für eine Laständerung des Inselnetzes charakteristisch ist, mit dem der Konverter (50) verbunden werden soll, und
- dem ersten Modul (29) einen Wert (D) der aktiven Dämpfung zu liefern, der aus dem am Eingang empfangenen Frequenzwert ($\Delta$f, $\Delta f_m$) bestimmt wird,

wobei das erste Modul (29) dazu ausgestaltet ist, eine erste Leistungsänderung ($\Delta$P1) zu liefern, die sich aus der Subtraktion der gemessenen Wirkleistung ($P_m$) und des Werts (D) der aktiven Dämpfung von der Referenzanfangsleistung ($P_{ref}$) ergibt.

5. Regelsystem (20) nach Anspruch 4, wobei der Statikblock (23) ein Modul (24), das dazu ausgestaltet ist, eine Frequenzänderung ($\Delta$f) aus der zweiten Leistungsänderung ($\Delta$P2) zu berechnen, und einen Addierer (25) umfasst, der dazu ausgestaltet ist, die Frequenzsteuerung ($C_f$) zu berechnen, indem eine Nennfrequenz ($f_0$) des Konverters (50) zu der Frequenzänderung ($\Delta$f) addiert wird, wobei der Statikblock (23) die von dem Modul (24) bestimmte Frequenzänderung ($\Delta$f) direkt über den Eingang des Blocks (40) zur aktiven Dämpfung liefert.

6. Regelsystem (200) nach Anspruch 4, ferner umfassend eine Phasenregelschleife (42), die dazu ausgestaltet ist, die Netzfrequenz ($f_m$) des Inselnetzes zu messen, und ein drittes Modul (44), das dazu ausgestaltet ist, eine Differenz ($\Delta f_m$) zwischen der Netzfrequenz ($f_m$) und einer Nennfrequenz ($f_0$) des Konverters (50) zu berechnen, wobei das dritte Modul (44) die berechnete Differenz ($\Delta f_m$) über den Eingang des Blocks (40) zur aktiven Dämpfung liefert und die Phasenregelschleife (42) den Statikblock (32) mit der gemessenen Netzfrequenz ($f_m$) versorgt, wobei der Statikblock (32) ein Modul (24), das dazu ausgestaltet ist, eine Frequenzänderung ($\Delta$f') aus der zweiten Leistungsänderung ($\Delta$P200) zu berechnen, und einen Addierer (25) umfasst, der dazu ausgestaltet ist, die gemessene Netzfrequenz ($f_m$) zu der von dem Modul (24) bestimmten Frequenzänderung ($\Delta$f') zu addieren, um die Frequenzsteuerung ($C_f$) zu bestimmen.

**Claims**

1. A method for regulating a converter, such as a power control system, for autonomously stabilizing the frequency in a microgrid to which the converter is intended to be connected, the microgrid comprising a generating set, the method comprising at least two iterations of the following steps:

a) a reception (100) of an initial power setpoint ($P_{ref}$) of the converter and an estimate of an active power ($P_m$) of the converter,
b) a determination (105) of a first power variation ($\Delta$P1) at least from the difference between the initial power setpoint ($P_{ref}$) and the estimated active power ($P_m$),
c) a determination (110) of a power regulation variable (P*) from the first power variation ($\Delta$P1),
d) a calculation (115) of a second power variation ($\Delta$P2, $\Delta$P200) at least from the difference between the power regulation variable (P*) and the estimated active power ($P_m$), and
e) a determination (125) of a frequency command ($C_f$) for commanding the converter from the second power variation ($\Delta$P2, $\Delta$P200),

14

**characterized in that** the method further comprises an active damping step comprising the following steps:

> f) a reception (130) of a frequency value ($\Delta f$, $\Delta f_m$) characteristic of a load variation of said microgrid to which the converter is intended to be connected, and
>
> g) a determination (135) of an active damping value (D) from the frequency value received ($\Delta f$, $\Delta f_m$) in step f),

the first power variation ($\Delta P1$) determined in step b) resulting from the initial power setpoint ($P_{ref}$) from which the estimated active power ($P_m$) and the active damping value (D) have been subtracted.

2. The method according to claim 1, wherein the determination of the frequency command ($C_f$) in step e) comprises a determination (120) of a frequency variation ($\Delta f$) from the second power variation ($\Delta P2$), and the addition of a nominal frequency ($f_0$) of the converter to the frequency variation ($\Delta f$), the frequency value received in step f) corresponding to said frequency variation ($\Delta f$) determined from the second power variation ($\Delta P2$).

3. The method according to claim 1, further comprises measuring the network frequency ($f_m$) of the microgrid with a phase-locked loop, and calculating a first frequency variation ($\Delta f_m$) from the difference between said measurement of the network frequency ($f_m$) and a nominal frequency ($f_0$) of the converter, the frequency value received in step f) corresponding to said first frequency variation ($\Delta f_m$), the second power variation ($\Delta P200$) calculated in step d) resulting from subtracting the estimated active power ($P_m$) and the active damping value (D) from the power regulation variable ($P^*$), the determination of the frequency command ($C_f$) in step e) comprising a determination (120) of a second frequency variation ($\Delta f$) from the second power variation ($\Delta P200$), and the measured network frequency ($f_m$) being added to the second frequency variation ($\Delta f'$) to determine the frequency command ($C_f$) in step e).

4. A regulation system (20, 200) of a converter (50) adapted to autonomously stabilize the frequency in a microgrid to which the converter (50) is intended to be connected, the microgrid comprising a generating set, the regulation system (20, 200) comprising:

> - a first module (29) receiving an initial power setpoint ($P_{ref}$) of the converter (50) and an estimate of an active power ($P_m$) of the converter (50),
> - an external regulator block (28) coupled to the output of the first module (29) and supplying a power regulation variable ($P^*$),
> - a second module (30, 31) configured to calculate a second power variation ($\Delta P2$, $\Delta P200$) by subtracting the estimated active power ($P_m$) of the converter (50) from the power regulation variable ($P^*$), and
> - a droop block (23, 32) configured to determine a frequency command ($C_f$) for commanding the converter (50) from the second power variation ($\Delta P2$, $\Delta P200$),

**characterized in that** the regulation system (20, 200) further comprises an active damping block (40) configured for:

> - receiving on an input a frequency value ($\Delta f$, $\Delta f_m$) characteristic of a load variation of said microgrid to which the converter (50) is intended to be connected, and
> - supplying to the first module (29) an active damping value (D) determined from the frequency value ($\Delta f$, $\Delta f_m$) received at the input,

the first module (29) being configured to supply a first power variation ($\Delta P1$) resulting from the subtraction of the measured active power ($P_m$) and the active damping value (D) from the initial reference power ($P_{ref}$).

5. The regulation system (20) according to claim 4, wherein the droop block (23) comprises a module (24) configured to calculate a frequency variation ($\Delta f$) from the second power variation ($\Delta P2$) and an adder (25) configured to calculate the frequency command ($C_f$) by adding a nominal frequency ($f_0$) of the converter (50) to said frequency variation ($\Delta_f$), the droop block (23) supplying the frequency variation ($\Delta f$) determined by said module (24) directly on said input of the active damping block (40).

6. The regulation system (200) according to claim 4, further comprising a phase-locked loop (42) configured to measure the network frequency ($f_m$) of the microgrid, and a third module (44) configured to calculate a difference ($\Delta f_m$) between said network frequency ($f_m$) and a nominal frequency ($f_0$) of the converter (50), the third module (44) supplying the difference ($\Delta f_m$) calculated on said input of the active damping block (40), and the phase-locked loop (42) supplying the droop block (32) with the measured network frequency ($f_m$), the droop block (32) comprising a module (24) configured to calculate a frequency variation ($\Delta f'$) from the second power variation ($\Delta P200$) and an adder (25) configured to add the measured network frequency ($f_m$) to the frequency variation ($\Delta f'$) determined by said module (24) to determine the frequency command ($C_f$).

FIG.1
ART ANTERIEUR

FIG.2
ART ANTERIEUR

FIG.3
ART ANTERIEUR

FIG.4
ART ANTERIEUR

100 — Reception

105 — Calculation of ΔP1

110 — Determination of P*

115 — Calculation of ΔP2

120 — Determination of Δf

125 — Determination of $C_f$

130 — Reception of $f_m$

135 — Determination of D

FIG.5

| 100 | Reception |
| 105 | Calculation of $\Delta P1$ |
| 110 | Determination of $P^*$ |
| 115 | Calculation of $\Delta P200$ |
| 120 | Determination of $\Delta f$ |
| 122 | Measurement of $f_m$ |
| 124 | Calculation of $\Delta f_m$ |
| 125 | Determination of $C_f$ |
| 130 | Reception of $f_m$ |
| 135 | Determination of D |

FIG.6

FIG.7

FIG.8

**EP 3 729 598 B1**

## RÉFÉRENCES CITÉES DANS LA DESCRIPTION

**Documents brevets cités dans la description**

- EP 3485386 A
- WO 2016133843 A
- EP 2731223 A
- CN 107294201
- CN 105743130